# EUROPEAN PATENT APPLICATION

(11) **EP 4 838 298 A1**
(43) Date of publication of application: **11.11.2026**
(21) Application number: 26176793.3
(22) Date of filing: 06.05.2026
(51) Int. Cl.: G03B 35/02, G03B 15/06, G02B 30/27, G06T 1/00

(54) **OPTICAL SYSTEM AND OPERATING METHOD THEREOF**

(30) Priority: 08.05.2025 US 202563801857 P; 08.04.2026 CN 202610455553
(71) Applicant: InnoLux Corporation, Jhu-Nan, Miao-Li County 350 (TW)
(72) Inventor: EDO, Keiko, 350 Miao-Li County (TW); SUMI, Naoki, 350 Miao-Li County (TW); YANG, Hung-Wen, 350 Miao-Li County (TW)
(74) Representative: Straus, Alexander

(57) **Abstract**

An optical system (OS) for capturing images comprises a camera (CM), configured to capture images; an object (OB), located within a field of view of the camera; a light source unit (LS), configured to illuminate the object (OB); and a controller (CN), configured to control the camera (CM) and the light source unit (LS). The optical system (OS) is configured to cause a light reflection point on the object (OB) and a viewing angle position of a user to move in a same direction by at least one of the following, thereby capturing image content corresponding to the viewing angle position to generate a plurality of images: (a) causing a relative movement of the light source unit (LS) with respect to the camera (CM) and the object (OB); and (b) turning on the light source unit (LS) at a frequency.

## Description

### Field of the Disclosure

The present disclosure relates to an optical system and an operating method thereof, and more particularly, to an optical system for capturing images and an operating method thereof.

### Background of the Disclosure

Existing image capturing systems present different glosses of an object by rotating a light source around the object. However, when the system includes a plurality of light sources, the aforementioned method results in an inability to accurately present the change in gloss of the object under different illumination angles. Therefore, how to solve the above problem is still an important issue in the field.

### Summary of the Disclosure

This is in mind, the present disclosure aims at providing an optical system for capturing images of an object under a plurality of light sources and an operating method thereof, wherein the images captured by the optical system can more accurately present the change in gloss of the object under different illumination angles.

This is achieved by an optical system according to the claims. The dependent claims pertain to corresponding further developments and improvements.

As will be seen more clearly from the detailed description following below, an optical system is provided by the present disclosure. The optical system includes a camera configured to capture images; an object located within a field of view of the camera; a light source unit configured to illuminate the object; and a controller configured to control the camera and the light source unit. The optical system is configured to cause a light reflection point on the object and a viewing angle position of a user to move in a same direction by at least one of the following, thereby capturing image content corresponding to the viewing angle position to generate a plurality of images: (a) causing a relative movement of the light source unit with respect to the camera and the object; and (b) turning on the light source unit at a frequency.

In addition, the present disclosure provides an operating method of an optical system, which includes: disposing a camera and an object with a fixed relative position; disposing a light source unit to illuminate the object; causing a light reflection point on the object and a viewing angle position of a user to move in a same direction by at least one of the following: (a) causing a relative movement of the light source unit with respect to the camera and the object; and (b) turning on the light source unit at a frequency; and capturing image content corresponding to the viewing angle position to generate a plurality of images.

In addition, the present disclosure provides a display device for displaying images obtained by the aforementioned optical system, which includes a display module; an optical component configured to modulate light to different angles; and a display controller, wherein the optical component comprises a lenticular lens, a liquid crystal gradient-index lens, or a parallax barrier.

### Brief Description of the Drawings

In the following, the disclosure is further illustrated by way of example, taking reference to the accompanying drawings. Thereof:
FIG. 1 is a schematic diagram of an optical system according to a first embodiment of the present disclosure;
FIG. 2 is a schematic diagram of an optical system according to a second embodiment of the present disclosure;
FIG. 3 is a schematic diagram of an object and a light source unit of an optical system according to an embodiment of the present disclosure;
FIG. 4 is a schematic diagram of an optical system according to a third embodiment of the present disclosure;
FIG. 5 is a schematic diagram of an optical system according to a fourth embodiment of the present disclosure;
FIG. 6 is a schematic diagram of an optical system according to a fifth embodiment of the present disclosure; and
FIG. 7 is a schematic cross-sectional view of a display device for displaying images captured by an optical system according to an embodiment of the present disclosure.

### Detailed Description

The present disclosure can be understood by referring to the following detailed description in conjunction with the accompanying drawings. It should be noted that for the ease of understanding for the reader and for the conciseness of the drawings, many drawings in the present disclosure only depict a part of the device, and the specific elements in the drawings are not drawn to actual scale. In addition, the number and size of each element in the figures are for illustrative purposes only and do not limit the scope of the present disclosure.

In the following description and claims, words such as "comprising" and "including" are open-ended terms and should therefore be interpreted as "comprising, but not limited to...".

When an element or layer is referred to as being "disposed on" or "connected to" another element or layer, it can be directly on or connected to the other element or layer, or intervening elements or layers may be present (indirect case). In contrast, when an element is referred to as being "directly on" or "directly connected to" another element or layer, there are no intervening elements or layers present. When an element or layer is referred to as being "electrically connected" to another element or layer, it can be interpreted as a direct electrical connection or an indirect electrical connection.

Although the terms "first," "second," "third," etc., may be used to describe various constituent elements, these constituent elements are not limited by these terms. These terms are only used to distinguish one constituent element from another in the description. The claims may not use the same terms and may use first, second, third, etc., according to the order in which the elements are recited in the claims. Therefore, a first constituent element in the description below could be a second constituent element in the claims.

In addition, there may be a certain error between any two compared numerical values or directions. The term "substantially" is generally interpreted as being within a range of plus or minus 10% of the given value, or as being within a range of plus or minus 5%, plus or minus 3%, plus or minus 2%, plus or minus 1%, or plus or minus 0.5% of the given value.

Furthermore, the phrases "a given range is from a first numerical value to a second numerical value" and "a given range falls within the range of a first numerical value to a second numerical value" indicate that the given range includes the first numerical value, the second numerical value, and other values therebetween.

If a first direction is perpendicular to a second direction, the angle between the first direction and the second direction may be between 80 degrees and 100 degrees; if a first direction is parallel to a second direction, the angle between the first direction and the second direction may be between 0 degrees and 10 degrees.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and this disclosure, and will not be interpreted in an idealized or overly formal sense unless expressly so defined in the embodiments of the present disclosure.

It should be understood that the following embodiments may be combined by substituting, reorganizing, and mixing technical features from several different embodiments to complete other embodiments without departing from the spirit of the present disclosure.

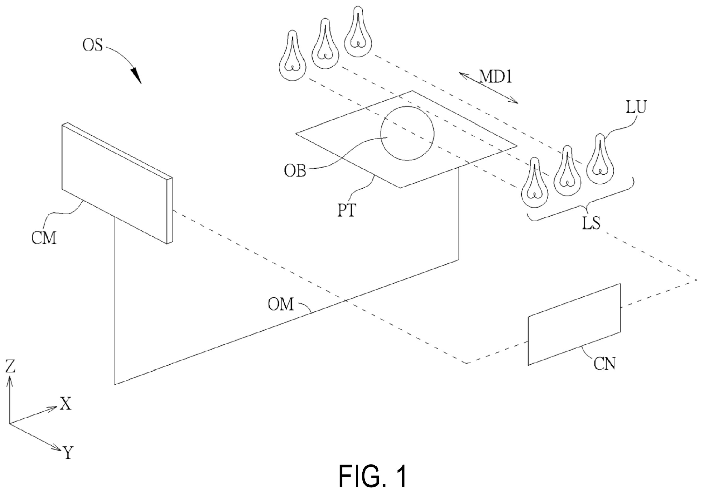

Please refer to FIG. 1. FIG. 1 is a schematic diagram of an optical system according to a first embodiment of the present disclosure. According to this embodiment, the optical system OS may comprise a camera CM, an object OB, and a light source unit LS, but is not limited thereto. The object OB is placed at any suitable position that can be captured by the camera CM, so that the camera CM can be used to capture images of the object OB. That is, the object OB is located within a field of view of the camera CM. For example, the object OB may be placed on a platform PT for the camera CM to capture images of the object OB, but is not limited thereto. To prevent the object OB from leaving the field of view of the camera CM, the relative position of the object OB and the camera CM can be fixed. For example, in this embodiment, the camera CM and the object OB (or the platform PT for placing the object OB) can be connected by an member OM (such as a crossbar), such that the relative position of the object OB and the camera CM remains unchanged even when the object and the camera CM move, but is not limited thereto. In some embodiments, the camera CM may be replaced by other suitable image capturing devices. The light source unit LS is placed above the object OB and is used to illuminate the object OB. It should be noted that "the light source unit LS is placed above the object OB" herein may refer to any suitable situation where the light source unit LS is higher than the object OB in a direction Z, and is not limited to the situation where the light source unit LS is directly above the object OB. For example, the light source unit LS may be higher than the object OB in the direction Z, and may be offset from the object OB in a direction X, a direction Y, or other suitable directions. The light source unit LS may comprise at least one light-emitting element LU. For example, FIG. 1 shows that the light source unit LS comprises three light-emitting elements LU above the object OB, but is not limited thereto.

According to this embodiment, the optical system OS can cause a relative movement of the light source unit LS with respect to the camera CM and the object OB, such that a light reflection point on the object OB from light emitted by the light source unit LS moves, and then the camera CM captures images of the object OB under different light illumination angles. Specifically, in this embodiment, the positions of the camera CM and the object OB can be fixed, and the light source unit LS (or the light-emitting elements LU) is moved to cause the relative movement of the light source unit LS with respect to the camera CM and the object OB. In detail, as shown in FIG. 1, the optical system OS of this embodiment may further comprise a controller CN, wherein the controller CN can be connected to the camera CM and the light source unit LS to control the camera CM and the light source unit LS. In this way, the movement of the light source unit LS can be controlled by the controller CN.

According to this embodiment, the moving direction of the light source unit LS can be designed such that the light reflection point on the object OB from the light emitted by the light source unit LS and a viewing angle position of a user move in a same direction. In this situation, the camera CM can capture image content of the object OB corresponding to different viewing angle positions, thereby generating a plurality of images that present the object OB under different light illumination angles. In detail, in this embodiment, when a line connecting the camera CM and the object OB extends in a first direction (i.e., the direction X), the light source unit LS is configured to move along a second direction (i.e., the direction Y) perpendicular to the first direction. That is, a moving direction MD1 of the light source unit LS (or the light-emitting elements LU) can be substantially parallel to the direction Y. For example, the light source unit LS can move in the direction Y, so that the camera CM and the object OB can move in a direction -Y relative to the light source unit LS and change their relative positions. In this situation, when the viewing angle position of the user moves along the direction Y, the light source unit LS can be moved in the direction Y to synchronously move the light reflection point on the object OB in the direction Y. It should be noted that the moving direction MD1 of the light source unit LS is not limited to being completely parallel to the direction Y. In some embodiments, a moving trajectory of the light source unit LS may be a straight line not parallel to the direction Y, but the straight line extends substantially in the direction Y. In some embodiments, the moving trajectory of the light source unit LS may be a curve extending substantially in the direction Y. When the light source unit LS comprises a plurality of light-emitting elements LU, the movement design of each light-emitting element LU can refer to the above. For example, when the viewing angle position of the user moves along the direction Y, the light-emitting elements LU in the light source unit LS can move together along (or substantially along) the direction Y. It should be noted that the moving direction and moving distance of each light-emitting element LU may depend on the actual needs during image capturing, and are not limited to having the same moving direction and moving distance.

With the above design, when the viewing angle position of the user moves in the direction Y, the controller CN can cause the light-emitting elements LU in the light source unit LS to move in the direction Y, so that the light reflection point on the object OB can move in the direction Y, and then the camera CM captures an image of the object OB at that viewing angle position. According to this embodiment, since the light source unit LS does not move around the object OB, but moves in a straight line (or a nearly straight line) in a direction perpendicular to the direction of the line connecting the camera CM and the object OB, the change in gloss of the object OB under different illumination angles can be accurately presented even when the optical system OS includes a plurality of light sources (i.e., light-emitting elements LU), thereby improving the texture of the images captured by the optical system OS.

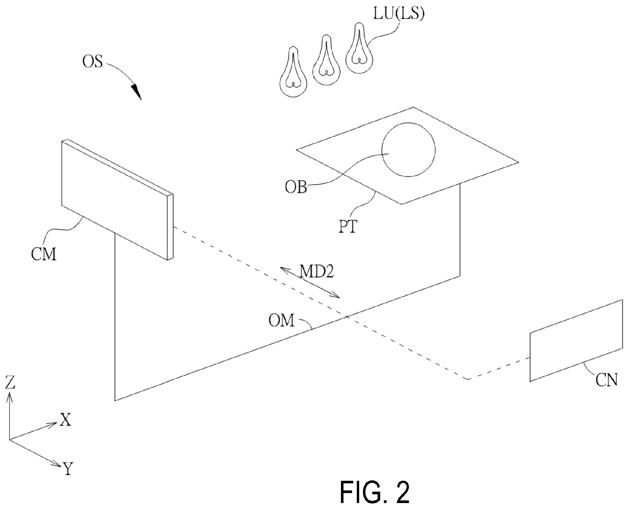

Please refer to FIG. 2. FIG. 2 is a schematic diagram of an optical system according to a second embodiment of the present disclosure. Compared to the first embodiment described above, in this embodiment, the camera CM and the object OB can be moved to cause the relative movement of the light source unit LS with respect to the camera CM and the object OB. Specifically, as shown in FIG. 2, in this embodiment, the movement of the camera CM can be controlled by the controller CN, and the object OB can move synchronously with the camera CM due to the arrangement of the member OM, such that the relative position of the light source unit LS with respect to the camera CM and the object OB is changed. In detail, when a line connecting the camera CM and the object OB extends in a first direction (i.e., the direction X), the camera CM and the object OB are configured to move along a second direction (i.e., the direction Y) perpendicular to the first direction. That is, a moving direction MD2 of the camera CM and the object OB can be perpendicular to the direction X. Similarly, a moving trajectory of the camera CM and the object OB can be a straight line or a curve extending substantially in the direction Y, and is not limited to a straight line completely parallel to the direction Y. In this situation, the controller CN may, for example, be connected to the camera CM, but not to the light source unit LS, but is not limited thereto.

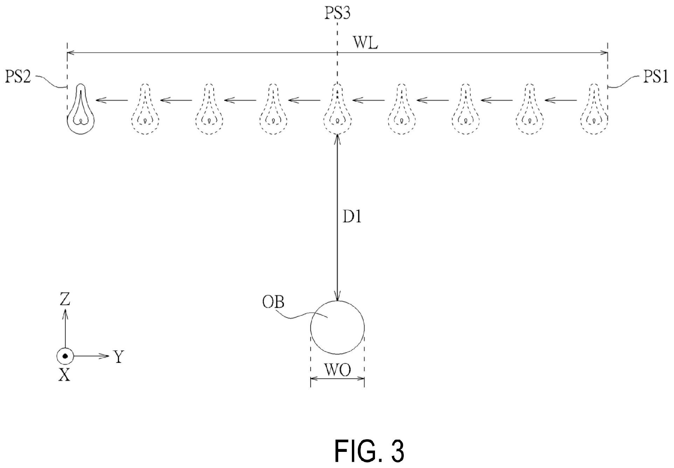

Please refer to FIG. 3. FIG. 3 shows a schematic diagram of the object OB and the light source unit LS of the optical system OS, wherein the optical system OS may be the optical system of the first and second embodiments described above. According to the present disclosure, the light source unit LS (or the light-emitting elements LU) may have a width WL. The width WL can be defined as the maximum moving distance of the light source unit LS or the maximum moving distance of the light source unit LS relative to the object OB and the camera CM. In detail, in the embodiment shown in FIG. 1, when the relative movement of the light source unit LS with respect to the object OB and the camera CM is generated by moving the light source unit LS, the maximum moving distance of the light source unit LS can be defined as the width WL of the light source unit LS. For example, the light source unit LS can move to a position PS1 at the furthest in the direction Y and to a position PS2 at the furthest in a direction -Y, and the width WL can be the distance between the position PS1 and the position PS2. In other words, the width WL can be the distance measured in the direction Y. In some embodiments, the position PS1 and the position PS2 can be symmetrical with respect to a center of the object OB, that is, in the direction Y, a distance from the center of the object OB to the position PS1 can be the same as a distance from the center of the object OB to the position PS2. Alternatively, in the embodiment shown in FIG. 2, when the relative movement of the light source unit LS with respect to the object OB and the camera CM is generated by moving the object OB and the camera CM, the maximum moving distance of the light source unit LS relative to the object OB and the camera CM can be the maximum moving distance of the object OB and the camera CM. In this situation, the maximum moving distance of the object OB and the camera CM can be defined as the width WL. For example, in FIG. 3, when the light source unit LS is fixed at a position PS3, the object OB (and the camera CM) can move to a position corresponding to the position PS1 at the furthest in the direction Y, and to a position corresponding to the position PS2 at the furthest in the direction -Y.

As shown in FIG. 3, there is also a shortest distance D1 between the light source unit LS and the object OB. The shortest distance D1 can be defined as the minimum distance between the light source unit and the object OB in a direction Z. Specifically, a first plane passing through an end of the light source unit LS adjacent to the object OB and perpendicular to the direction Z is first determined, and a second plane passing through an end of the object OB adjacent to the light source unit LS and perpendicular to the direction Z is determined, and the shortest distance D1 can be the distance between the first plane and the second plane. The object OB may have a width WO, wherein the width WO can be defined as the maximum width of the object OB. According to this embodiment, the width WL of the light source unit LS, the shortest distance D1 between the light source unit LS and the object OB, and the width WO of the object OB can satisfy the following formula (1): $W 0 + 2 * D 1 * tan \left(10°\right) \leq WL \leq W 0 + 2 * D 1 * tan \left(50°\right)$ (1)

Alternatively, the width WL, the shortest distance D1, and the width WO can satisfy the following formula (2): $\frac{\left(WL-W0\right)}{2 ∗ tan \left(50°\right)} \leq D 1 \leq \frac{\left(WL-W0\right)}{2 ∗ tan \left(10°\right)}$ (2)

During the movement of the light source unit LS or the object OB (and the camera CM), by making the width WL, the shortest distance D1, and the width WO satisfy the above conditions, the gloss variation presented in the images of the object OB captured by the optical system OS at different viewing angle positions of the user can be improved.

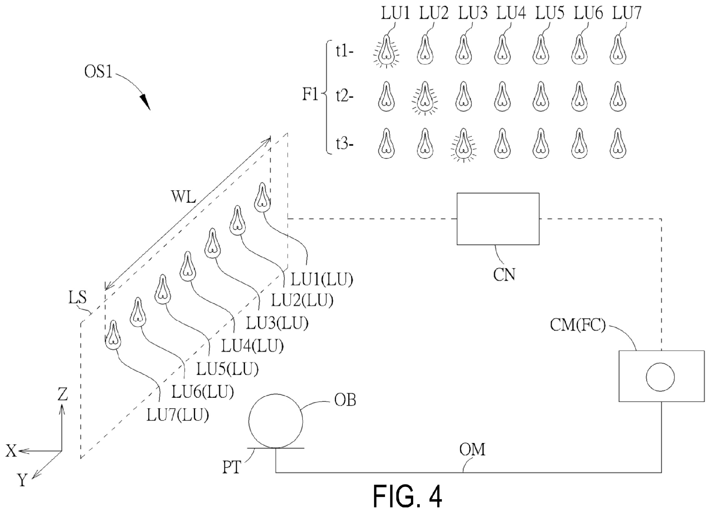

Please refer to FIG. 4. FIG. 4 is a schematic diagram of an optical system according to a third embodiment of the present disclosure. According to this embodiment, the optical system OS1 can cause the relative movement of the light source unit LS with respect to the camera CM and the object OB by turning on the light source unit LS at a frequency. Specifically, the light source unit LS may comprise a plurality of light-emitting elements LU, wherein the light source unit LS can switch the light-emitting elements LU on and off at a frequency, such that different light-emitting elements LU can be turned on at different points in time, or different light-emitting elements LU can emit light. For example, as shown in FIG. 4, the light source unit LS may comprise a plurality of light-emitting elements LU1-LU7, wherein by turning on different light-emitting elements LU at different points in time, a relative movement between the light source unit LS and the object OB can be caused. The switching of the light source unit LS can be achieved by the controller CN, but is not limited thereto. In some embodiments, the controller CN may not need to be connected to the camera CM. In detail, in this embodiment, the light source unit LS can be turned on at a frequency F1, wherein at a time t1, the light-emitting element LU1 can be turned on and the other light-emitting elements LU are turned off; at a time t2, the light-emitting element LU2 can be turned on and the other light-emitting elements LU are turned off; and at a time t3, the light-emitting element LU3 can be turned on and the other light-emitting elements LU are turned off. In this way, a light-emitting position of the light source unit LS can move relative to the object OB in an arrangement direction of the light-emitting elements LU1 to LU3, such that the light reflection point on the object OB can also move in the arrangement direction of the light-emitting elements LU1 to LU3. In this situation, referring to the content of the above embodiments, in this embodiment, the light-emitting elements LU1-LU7 can be arranged along the direction Y, or substantially along the direction Y, such that during the process of switching the turned-on light-emitting elements LU, the movement of the light source unit LS can proceed in a direction parallel to (or substantially parallel to) the direction Y. In other words, an arrangement direction of the light-emitting elements LU in the light source unit LS can be perpendicular to the direction of the line connecting the object OB and the camera CM. Therefore, when the viewing angle position of the user moves in the direction Y, the light source unit LS can be moved relative to the object OB in the same direction Y by sequentially turning on the light-emitting elements LU1-LU7; when the viewing angle position of the user moves in the direction -Y, the light source unit LS can be moved relative to the object OB in the direction -Y by sequentially turning on the light-emitting elements LU7-LU1. It should be noted that, in some embodiments, a plurality of light-emitting elements may be turned on simultaneously at one point in time, and is not limited to the above. For example, the light-emitting elements LU1-LU2 can be turned on at one point in time, and the light-emitting elements LU3-LU4 can be turned on at the next point in time, thereby causing the relative movement between the light source unit LS and the object OB while increasing the illumination intensity. In addition, in this embodiment, the camera CM may have a shutter frequency FC, wherein an on-frequency of the light source unit LS (frequency F1) may be less than or equal to the shutter frequency FC. With the above design, the situation where the camera CM fails to capture an image of the object OB at a specific illumination angle at a specific point in time can be reduced, thereby improving the image capturing process of the optical system OS1.

The optical system OS1 of this embodiment can also satisfy the numerical design described in the aforementioned formulas (1)-(2), wherein the aforementioned width WL in this embodiment can be defined as the distance between the two farthest light-emitting elements LU in the light source unit LS. For example, as shown in FIG. 4, the distance in the direction Y between an end of the light-emitting element LU1 away from the light-emitting element LU2 and an end of the light-emitting element LU7 away from the light-emitting element LU6 can be defined as the width WL. The definitions of the shortest distance D1 and the width WO in this embodiment can refer to the above, and thus will not be repeated.

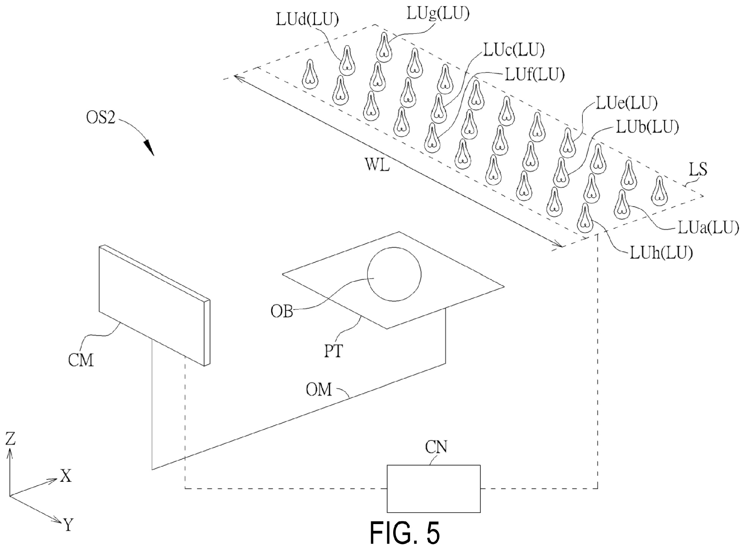

Please refer to FIG. 5. FIG. 5 is a schematic diagram of an optical system according to a fourth embodiment of the present disclosure. Compared to the third embodiment described above, the light source unit LS of the optical system OS2 of this embodiment may comprise a plurality of light-emitting elements LU, wherein the light-emitting elements LU can be arranged in a matrix structure. In detail, as shown in FIG. 5, the light source unit LS of the optical system OS2 may comprise a plurality of light-emitting elements LU arranged on the object OB and along the directions X and Y, thereby forming a matrix structure of the light-emitting elements LU, but is not limited thereto. In some embodiments, the light-emitting elements LU can be arranged along any two directions perpendicular to the direction Z to form a matrix structure. As shown in FIG. 5, the matrix structure formed by the arrangement of the light-emitting elements LU can be a planar matrix structure, but is not limited thereto. In other embodiments, the matrix structure formed by the arrangement of the light-emitting elements LU can be a curved matrix structure.

Similarly, in this embodiment, the controller CN can change the portion of the light-emitting elements LU that are turned on in the light source unit LS to cause the relative movement between the light source unit LS and the object OB. In some embodiments, the light source unit LS can turn on one light-emitting element LU at one point in time at a frequency (such as the aforementioned frequency F1), and achieve the effect of moving the light source unit LS by turning on different light-emitting elements LU at different points in time. For example, as shown in FIG. 5, when the viewing angle position of the user moves in the direction -Y, the light-emitting elements LUa, LUb, LUc, and LUd arranged in a straight line along the direction -Y can be sequentially turned on at different points in time, so that the light reflection point on the object OB can also move in the direction -Y, but is not limited thereto. In other embodiments, the light-emitting elements LU turned on at different points in time may not be arranged in a straight line, but are arranged substantially parallel to the direction Y. For example, in FIG. 5, the light reflection point on the object OB can be moved in the direction -Y by sequentially turning on the light-emitting elements LUa, LUe, LUf, and LUg at different points in time. In some embodiments, the light source unit LS can turn on a plurality of adjacent light-emitting elements LU at one point in time at a frequency, and achieve the effect of moving the light source unit LS by turning on different portions of the light-emitting elements LU at different points in time. For example, as shown in FIG. 5, when the viewing angle position of the user moves in the direction -Y, the light-emitting elements LUa and LUh can be turned on at one point in time, the light-emitting elements LUb and LUe can be turned on at the next point in time, the light-emitting elements LUc and LUf can be turned on at the next point in time, and the light-emitting elements LUd and LUg can be turned on at the next point in time, so that the light reflection point on the object OB moves in the direction -Y. It should be noted that the number of light-emitting elements LU turned on at different points in time can be the same or different. Regardless of the above, in this embodiment, an arrangement direction of the portion of the light-emitting elements LU of the light source unit LS that is turned on at a frequency (such as the aforementioned frequency F1) can be parallel to (or substantially parallel to) the moving direction of the viewing angle position, so that the moving direction of the light reflection point on the object OB can be the same as the moving direction of the viewing angle position. In some embodiments, the controller CN may not be connected to the camera CM.

The optical system OS2 of this embodiment can also satisfy the numerical design described in the aforementioned formulas (1)-(2), wherein the aforementioned width WL in this embodiment can be defined as the distance between the two farthest light-emitting elements LU in the direction Y in the light source unit LS, or it can be defined as the width in the direction Y of the matrix formed by the arrangement of the light-emitting elements LU. For example, as shown in FIG. 5, the distance in the direction Y between the light-emitting element LUa and the light-emitting element LUd can be defined as the width WL. The definitions of the shortest distance D1 and the width WO in this embodiment can refer to the above, and thus will not be repeated.

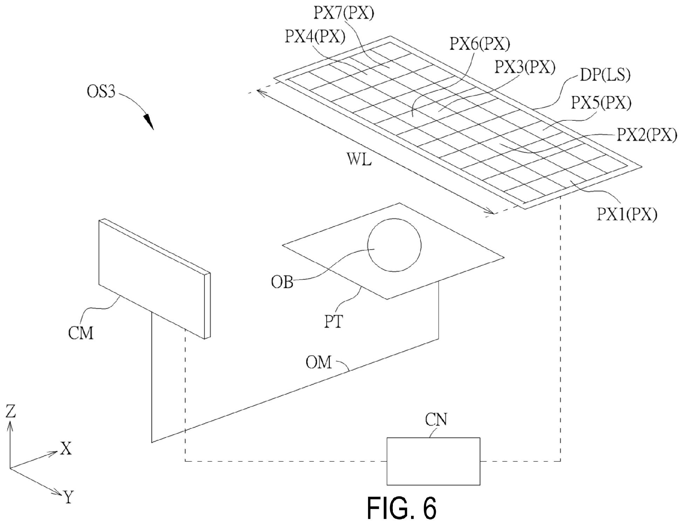

Please refer to FIG. 6. FIG. 6 is a schematic diagram of an optical system according to a fifth embodiment of the present disclosure. Compared to the third embodiment described above, the light source unit LS of the optical system OS3 of this embodiment may comprise a display DP. The display DP can be placed above the object OB, and its surface can be perpendicular to the direction Z. A light-emitting surface of the display DP can face downwards, or in other words, can face the object OB. The display DP may comprise a liquid crystal display, a mini-LED display, a micro-LED display, an organic light-emitting diode display, or other suitable types of displays. The display DP may comprise a flat panel display or a curved display. According to this embodiment, the display DP may comprise a plurality of pixels PX, and the controller CN can be configured to turn on at least a portion of the pixels PX. Similarly, in this embodiment, an arrangement direction of the portion of the pixels PX that are turned on in the light source unit LS can be parallel to (or substantially parallel to) the moving direction of the viewing angle position. For example, in some embodiments, when the viewing angle position of the user moves in the direction -Y, pixels PX1-PX4 arranged in a straight line along the direction -Y can be sequentially turned on at different points in time, or pixels PX1, PX5, PX6, and PX7 arranged not in a straight line but substantially along the direction -Y can be sequentially turned on. In some embodiments, when the viewing angle position of the user moves in the direction -Y, a first portion of the pixels PX adjacent to each other can be turned on at one point in time, a second portion of the pixels PX adjacent to each other can be turned on at the next point in time, and a third portion of the pixels PX adjacent to each other can be turned on at the next point in time, wherein the first portion, the second portion, and the third portion can be arranged along the direction -Y, or in other words, extend in the direction -Y. Regardless of the above, a light pattern displayed by the display DP can move in the direction -Y over time.

The optical system OS3 of this embodiment can also satisfy the numerical design described in the aforementioned formulas (1)-(2), wherein the aforementioned width WL in this embodiment can be defined as the width in the direction Y of the matrix formed by the arrangement of the pixels PX in the display DP. In addition, the shortest distance D1 can be defined as the minimum distance between the pixels PX and the object OB in the direction Z, that is, the vertical distance between the surface of the display DP and the object OB.

According to the above embodiments, an operating method of the optical system of the present disclosure may comprise the following steps:
S1: Disposing the camera CM and the object OB with a fixed relative position
S2: Disposing the light source unit LS to illuminate the object OB
S3: Causing the light reflection point on the object OB and a viewing angle position of a user to move in a same direction by at least one of the following:
   (a) causing a relative movement of the light source unit LS with respect to the camera CM and the object OB
   (b) turning on the light source unit LS at a frequency
S4: Capturing image content corresponding to the viewing angle position to generate a plurality of images

The details can be referred to in the above, and thus will not be repeated.

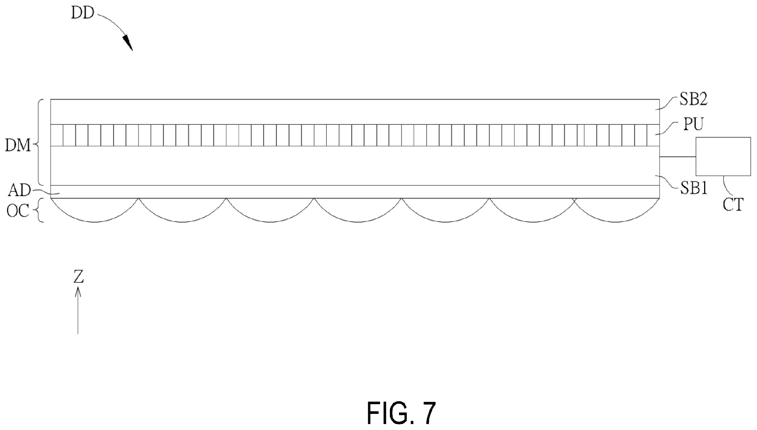

Please refer to FIG. 7. FIG. 7 shows a schematic cross-sectional view of a display device for displaying images captured by the optical system of any of the above embodiments. As shown in FIG. 7, the display device DD may comprise a display module DM, an optical component OC, and a display controller CT, but is not limited thereto. The display module DM may comprise any suitable display panel, such as a liquid crystal display panel or a light-emitting diode display panel. The display module DM may comprise substrates SB1, SB2 and a plurality of pixel units PU disposed between the substrates SB1, SB2. Although not shown in the figure, the display module DM may also comprise layers or elements such as a circuit layer, a color conversion layer, etc. The display controller CT can be electrically connected to the display module DM and is used to control the display module DM to display the images captured by the aforementioned optical system. Specifically, the optical system can capture images of the object OB at different viewing angle positions, and display them cyclically on the display module DM through the display controller CT to present the change in gloss of the object OB under different light source illumination angles. The optical component OC can be attached to the display module DM through an adhesive layer AD. The optical component OC can be used to modulate light to different angles, so that the images observed by the user have a three-dimensional effect, thereby improving the viewing experience. The optical component OC may comprise a lenticular lens, a liquid crystal gradient-index lens, a parallax barrier, or other suitable components.

In summary, the present disclosure provides an optical system that comprises a camera with a fixed relative position, an object, and a light source unit located above the object. The light source unit can move in another direction perpendicular to the direction of the line connecting the camera and the object, thereby capturing the change in gloss of the object under different illumination angles by the camera. With the above movement design of the light source unit, the optical system can still accurately present the change in gloss of the object under different illumination angles when including a plurality of light sources, thereby improving the texture of the images captured by the optical system.

## Claims

1. An optical system (OS) for capturing images, **characterized by** comprising:
a camera (CM) configured to capture image;
an object (OB) located within a field of view of the camera (CM);
a light source unit (LS) configured to illuminate the object (OB); and
a controller (CN) configured to control the camera (CM) and the light source unit (LS);
wherein the optical system (OS) is configured to cause a light reflection point on the object (OB) and a viewing angle position of a user to move in a same direction by at least one of the following, thereby capturing image content corresponding to the viewing angle position to generate a plurality of images:
(a) causing a relative movement of the light source unit (LS) with respect to the camera (CM) and the object (OB); and
(b) turning on the light source unit (LS) at a frequency (F1).

2. The optical system (OS) according to claim 1, **characterized in that** a line connecting the camera (CM) and the object (OB) extends in a first direction (X), and the light source unit (LS) is configured to move along a second direction (Y) perpendicular to the first direction (X).

3. The optical system (OS) according to claim 1, **characterized in that** a line connecting the camera (CM) and the object (OB) extends in a first direction (X), and the camera (CM) and the object (OB) are configured to move along a second direction (Y) perpendicular to the first direction (X).

4. The optical system (OS) according to any one of claim 1 to claim 3, **characterized in that** the light source unit (LS) has a width WL, a shortest distance between the light source unit (LS) and the object (OB) is D1, and the object (OB) has a width W0, wherein the width WL, the shortest distance D1, and the width W0 satisfy: $W 0 + 2 * D 1 * tan \left(10°\right) \leq WL \leq W 0 + 2 * D 1 * tan \left(50°\right) .$

5. The optical system (OS) according to claim 1, **characterized in that** the light source unit (LS) comprises at least one light-emitting element (LU), the light source unit (LS) switches the at least one light-emitting element (LU) on and off at the frequency (F1), the camera (CM) has a shutter frequency (FC), and the frequency (F1) is less than or equal to the shutter frequency (FC).

6. The optical system (OS) according to claim 1, **characterized in that** the light source unit (LS) comprises a liquid crystal display, a mini-LED display, a micro-LED display, or an organic light-emitting diode display, and the controller (CN) is configured to turn on at least a portion of a plurality of pixels (PX) in the light source unit (LS).

7. An operating method of an optical system (OS) for capturing images, **characterized by** comprising:
disposing a camera (CM) and an object (OB) with a fixed relative position;
disposing a light source unit (LS) to illuminate the object (OB);
causing a light reflection point on the object (OB) and a viewing angle position of a user to move in a same direction by at least one of the following:
(a) causing a relative movement of the light source unit (LS) with respect to the camera (CM) and the object (OB); and
(b) turning on the light source unit (LS) at a frequency (F1); and
capturing image content corresponding to the viewing angle position to generate a plurality of images.

8. The operating method according to claim 7, **characterized in that** a line connecting the camera (CM) and the object (OB) extends in a first direction (X), and the light source unit (LS) moves along a second direction (Y) perpendicular to the first direction (X).

9. The operating method according to claim 7, **characterized in that** a line connecting the camera (CM) and the object (OB) extends in a first direction (X), and the camera (CM) and the object (OB) move along a second direction (Y) perpendicular to the first direction (X).

10. The operating method according to any one of claim 7 to claim 9, **characterized in that** the light source unit (LS) has a width WL, a shortest distance between the light source unit (LS) and the object (OB) is D1, and the object (OB) has a width W0, wherein the width WL, the shortest distance D1, and the width W0 satisfy: $W 0 + 2 * D 1 * tan \left(10°\right) \leq WL \leq W 0 + 2 * D 1 * tan \left(50°\right) .$

11. The operating method according to claim 7, **characterized in that** the light source unit (LS) comprises at least one light-emitting element (LU), the light source unit (LS) switches the at least one light-emitting element (LU) on and off at the frequency (F1), the camera (CM) has a shutter frequency (FC), and the frequency (F1) is less than or equal to the shutter frequency (FC).

12. The operating method according to claim 7, **characterized in that** the light source unit (LS) comprises a liquid crystal display, a mini-LED display, a micro-LED display, or an organic light-emitting diode display, and the controller (CN) is configured to turn on at least a portion of a plurality of pixels (PX) in the light source unit (LS).

13. The operating method according to claim 12, **characterized in that** an arrangement direction of the at least a portion of the plurality of pixels (PX) is parallel to a moving direction of the viewing angle position.

14. A display device (DD) configured to display the plurality of images obtained by the optical system (OS) according to claim 1, **characterized by** comprising:
a display module (DM);
an optical component (OC) configured to modulate light to different angles; and
a display controller (CT).

15. The display device (DD) according to claim 14, **characterized in that** the optical component (OC) comprises a lenticular lens, a liquid crystal gradient-index lens, or a parallax barrier.
